# EUROPÄISCHE PATENTSCHRIFT

(11) **EP 4 189 132 B1**
(45) Veröffentlichungstag und Bekanntmachung des Hinweises auf die Patenterteilung: **04.12.2024**
(21) Anmeldenummer: 21754700.9
(22) Anmeldetag: 19.07.2021
(51) Int. Cl.: C23C 4/08, C23C 4/10, C23C 4/129, C23C 4/131, C23C 4/134, C23C 28/00, C23C 28/02, C23C 30/00, F16J 9/26

(54) **KOLBENRING MIT ÜBERGANGSSCHICHT**
PISTON RING WITH TRANSITION LAYER
SEGMENT DE PISTON AVEC COUCHE DE TRANSITION

(30) Priorität: 21.09.2020 DE 102020124528; 12.11.2020 DE 102020006953
(43) Veröffentlichungstag der Anmeldung: 07.06.2023
(73) Patentinhaber: Federal-Mogul Burscheid GmbH, 51399 Burscheid (DE)
(72) Erfinder: SCHMIDT, Peter, 51399 Burscheid (DE); BUCHMANN, Michael, 81249 München (DE); AUMILLER, Markus, 86316 Friedberg (DE)
(74) Vertreter: Kurig, Thomas
(86) Internationale Anmeldenummer: PCT/EP2021/070090
(87) Internationale Veröffentlichungsnummer: WO 2022/058068

(56) Entgegenhaltungen:
- WO-A1-2019/015818
- DE-A1- 102007 025 949
- DE-B3- 102008 056 720

## Beschreibung

Die vorliegende Erfindung betrifft im Allgemeinen einen Kolbenring.

Der Kolbenring weist eine Verschleißschutzschicht und eine Einlaufschicht auf, zwischen denen eine Übergangsschicht vorliegt, die eine mechanisch stabile und thermische beständige Schichtbindung bereitstellt.

Der Fortschritt im Bereich von Großmotoren führt zu stetig steigenden Verbrennungsdrücken und zu höheren Belastungen von Kolbenringen hinsichtlich Temperatur und Flächenpressung. Die tribologischen Eigenschaften der aktuellen Schichtsysteme fuhren insbesondere zu Problemen beim Übergang von einer weichen Einlaufschicht zu einer harten Verschleißschutzschicht. Es können thermische Überlastung bzw. Brandspurbildungen (Scuffing) und Schichtabplatzungen auftreten.

Die Belastungen denen bestimmte Materialien, wie beispielsweise die der Laufflächen von Kolbenringen, unterworfen sind, haben in den letzten Jahren aufgrund einer gesteigerten Leistung von Motoren unter gleichzeitiger Verringerung der Abgasemissionen stetig zugenommen. Daher müssen die Kolbenringe verschiedensten Anforderungen gerecht werden, wie einen geringeren Ölverbrauch zeigen und zum Betrieb mit schwefelfreien Schmierölen und Brennstoffe geeignet sein, welche mit einer erhöhten Materialbelastung und Verschleiß einhergehen.

Die Kolbenringe werden nach Anforderungen an mechanische Festigkeit, Verschleißwiderstand und Elastizität aus Gusseisen oder Stahl gefertigt. Zur Verbesserung des Verschleißverhaltens werden Beschichtungen auf den Ringen angebracht. Dabei kommen verschiedenste elektrochemische Verfahren, wie z.B. Verchromen, oder thermisches Spritzbeschichten
sowie physikalisches CrN und chemisches DLC-Beschichten zum Einsatz. Auf Stahlringen wird häufig die an der Zylinderlauffläche liegende Randschicht durch Nitrieren gehärtet.

Aus der deutschen Patentanmeldung DE 10 2007 025949 A1 ist ein Kolbenring mit einer thermisch gespritzten Verschleißschutzschicht und einer Einlaufschicht bekannt, bei der zwischen der Verschleißschutzschicht und der Einlaufschicht ein graduierter Übergang besteht.

Die internationale Patentanmeldung WO 2019/015818 A1 offenbart einen Kolbenring mit Kugelstrahl-kaltverfestigter Verschleißschutzschicht.

Aus der deutschen Patentschrift DE 10 2008 056720 B3 ist ein Gleitelement bekannt, das eine thermisch gespritzten Verschleißschutzschicht umfasst die durch thermisches Spritzen eines Pulvers umfassend die Elementanteile 40-79,9 Gewichtsprozent Chrom, Cr; 10-30 Gewichtsprozent Nickel, Ni; 0,1-5 Gewichtsprozent Kohlenstoff, C; 10-20 Gewichtsprozent Stickstoff, N erhältlich ist.

Die Deutsche Patentschrift DE 3421569 C1 offenbart eine Beschichtung für Laufflächen von Kolbenringen, welche eine radial von innen nach außen sich kontinuierlich verändernde Struktur bzw. Zusammensetzung, beispielsweise eine von innen nach außen radial zunehmende Porosität der Beschichtung, aufweist. Die Beschichtung kann beispielsweise mittels Plasmaspritzverfahren hergestellt werden.

Ein abriebfester Überzug für einen Kolbenring wird in der Deutschen Patentanmeldung DE 41 12422 A1 beschrieben. Der Überzug enthält ein Chromnitrid, wobei die Stickstoffkonzentration des Überzuges von der Grenzfläche zwischen den Trägermaterial und dem Überzug in Richtung auf die äußere Oberfläche des Überzuges kontinuierlich zunimmt. Der Überzug wird durch Aufdampfen von Chrom mit variablen Anteilen an Stickstoff erzielt.

Das Deutsche Patent DE 10 2004 032 403 B3 betrifft eine Beschichtung für einen Kolbenring und ein entsprechendes Herstellungsverfahren. Auf der äußeren Umfangsfläche des Grundkörpers des Kolbenrings sind mehrere Schichten lagenweise übereinander aufgebracht, wobei die der äußeren Umfangsfläche zugewandte Haftschicht eine PVD-Haftschicht auf Basis von Cr ist, auf der Haftschicht eine PVD-CrN-Gradientenschicht mit einem nach außen hin zunehmenden Stickstoffgehalt einer Schichtzusammensetzung von Cr über Cr-Cr2N-Gemischen, Cr2N, Cr2N-CrN-Gemi-schen bis hin zum CrN aufgebracht und auf der CrN-Gradientenschicht mindestens eine Deckschicht konstanter Zusammensetzung auf Basis von CrN, Cr2N oder einem Gemisch davon aufgebracht ist.

Aus dem Europäischen Patent EP 21 18534 B1 sind Kolbenringe mit einem 3-Schicht-System bekannt. Auf einem unrund bearbeiteten Rohling wird eine Haftvermittlerschicht aufgebracht. Diese dient zum Ausgleich von Unterschieden im Wärmeausdehnungskoeffizienten zwischen Grundmaterial und Verschleißschutzschicht und verbessert das Thermoschockverhalten. Auf der Haftvermittlerschicht wird eine Verschleißschutzschicht abgeschieden, die im Allgemeinen aus einem Metall z.B. Ni, NiCr, Fe, FeCr, NiCr und Molybdän (hohe Brandspurfestigkeit) mit eingelagerten Hartstoffen (CrC oder MoC) besteht. Auf die Verschleißschutzschicht wird eine weiche Einlaufschicht (AlCuFe) aufgebracht, welche eine schnelle Anpassung und einen kurzen Einlauf der Ringoberfläche/-form zur Zylinderoberfläche/ -form ermöglicht. Die Schichten werden durch Plasmabeschichten (Haftvermittler und Verschleißschutzschicht) bzw. Lichtbogendrahtspritzen (Einlaufschicht) abgeschieden, wobei sich prozessbedingt ein rauer und zerklüfteter Übergang zwischen den einzelnen Schichten ergibt. Der Schichtwechsel ist durch einen unregelmäßigen Übergang der beiden Schichtmaterialien (Einlaufschicht in Verschleißschutzschicht) gekennzeichnet und wird durch Oberflächenrauheit der Verschleißschutzschicht definiert. Nach dem Abtrag der weichen Einlaufschichtbereiche wird die tribologische Funktion der Lauffläche schlagartig von der Verschleißschutzschicht übernommen. Die tribologischen Bedingungen während des Schichtwechsels werden durch die Oberflächenrauheit der Verschleißschutzschicht zeitlich bestimmt.

Zudem haben Kolbenringe ein balliges Laufflächenprofil bzw. weisen eine tonnenförmige Mantelfläche auf. Im Bereich der hohen Balligkeit (Ringmitte, hohe Flächenpressung) wird die Einlaufschicht sehr schnell abgetragen, während im Bereich der niedrigen Balligkeit das Einlaufschichtmaterial länger vorliegen kann.

Um die thermische Überlastung/Scuffing beim Schichtwechsel zu verringern, wird bei neuen Ringdesigns die Verschleißschutzschicht geschliffen, d.h. die Oberflächenrauheit wird reduziert. Diese Designvariante benötigt vorab einen kritischen Rundspannprozess der Ringe bzw. aufwendigen Schleifprozess der Verschleißschutzschicht-Oberfläche. Zudem wird durch das Schleifen bzw. Glätten der Oberfläche auch die Haftfestigkeit der Einlaufschicht reduziert. Um Schichtabplatzungen der Einlaufschicht bei diesem Design zu vermeiden, darf die Schichtdicke der Einlaufschicht max. 100µm nicht überschreiten.

Allerdings sind bisher keine Maßnahmen bekannt, mit denen Beschichtungen aus mehreren Lagen mit einer ausreichenden mechanischen und thermischen Belastbarkeit erzeugt werden können, die ihre Funktion während der gesamten Lebensdauer eines Verbrennungsmotors zufrieden stellend erfüllen. Weiterhin müssen Beschichtungen auf Trägermaterialien, wie beispielsweise auf den Laufflächen von Kolbenringen, außer einer guten und temperaturfesten Haftung (Adhäsion) am Träger und einer guten und temperaturfesten Bindung innerhalb der Schicht (Kohäsion) auch verschleißfest sein. Weiterhin müssen die Schichten nach langen Laufzeiten kein oder nur ein geringes thermisches Ermüdungsverhalten (Rissbildung in der Schicht) zeigen.

Eine Aufgabe der vorliegenden Erfindung besteht daher in einer weiteren Verbesserung der mechanischen Festigkeit und dem Verschleißwiderstand von Kolbenringen, so dass das Einlaufverhalten von Kolbenringen unter Betriebsbedingungen verbessert und eine verlängerte Betriebslebensdauer gewährleistet ist.

Diese Aufgabe wird durch einen Kolbenring mit den Merkmalen des vorliegenden Anspruchs 1 gelöst, bevorzugte Ausführungsformen sind in abhängigen Ansprüchen beschrieben.

Auf ein Trägermaterial eines Kolbenrings wird eine Verschleißschutzschicht aufgebracht, wobei eine Einlaufschicht vorgesehen ist. Zwischen Verschleißschutzschicht und Einlaufschicht liegt weiterhin eine Übergangsschicht vor, die einen weitgehend kontinuierlichen Übergang der Materialien gewährleistet. Die Verschleißfestigkeit der erfindungsgemäßen Beschichtung wird hierbei durch die Verschleißschutzschicht bereitgestellt, wohingegen günstige Einlaufeigenschaften durch die Einlaufschicht erzielt werden. Die Verschleißschutzschicht verhindert übermäßigen Verschleiß unter extremen Betriebsbedingungen über die gesamte Lebensdauer des Motors. Die Einlaufschicht muss nicht nachbearbeitet werden, sondern erhält ihre endgültige Form durch den in der Einlauf-Phase erfolgenden Abrieb. Weiterhin liegt zwischen Verschleißschutzschicht und EinlaufSchicht eine Übergangsschicht vor, die verbesserte tribologische Eigenschaften während des Übergangs von Einlaufschicht zu Verschleißschutzschicht bewirkt.

Der Kolbenring umfasst eine auf einem Trägermaterial vorliegende Verschleißschutzschicht aus Ni, Cr, Mo und/oder Cr3C2 und eine Einlaufschicht aus AlFeCu; wobei auf der Verschleißschutzschicht, und zwar zwischen Verschleißschutzschicht und Einlaufschicht eine Übergangsschicht vorgesehen ist.

Es wurde nun gefunden, dass derartig beschichtete Trägermaterialien und insbesondere Kolbenringe eine verbesserte mechanische Belastbarkeit während des Übergangs von Einlaufschicht zu Verschleißschutzschicht aufweisen. Weiterhin können bei den erfindungsgemäßen Beschichtungen durch den "weichen" Materialübergang insgesamt verbesserte tribologische Eigenschaften beobachtet werden. Von Vorteil ist ebenfalls, dass im Fertigungsprozess, wie beispielsweise beim thermischen Spritzen von Mehrlagenschichten, keine Stabilisierungszeiten anfallen und benötigte Materialmengen verringert werden können. Erfindungsgemäß umfasst der Kolbenring eine Verschleißschutzschicht mit einer Zusammensetzung von 52 - 62 Gew-% Molybdän, 12 - 22 Gew-% Chrom, 0.5 - 2 Gew-% Kohlenstoff und 12 - 20 Gew-% Nickel sowie unvermeidbaren Verunreinigungen. Die Komponenten Mo, Cr, C und Ni sowie unvermeidbare Verunreinigungen addieren sich dabei in der Zusammensetzung der Verschleißschutzschicht zu 100 Gew-%. Erfindungsgemäß umfasst die Einlaufschicht eine Zusammensetzung von 5 - 7 Gew-% Aluminium, 1 - 3 Gew-% Eisen, wobei der Rest zu 100 Gew-% durch Kupfer und unvermeidbare Verunreinigungen gebildet wird.

Der Kolbenring umfasst eine Übergangsschicht mit 40-60 % AlFeCu und 60-40 % Ni, Cr, Mo und/oder Cr3C2. Damit sind gute Übergangsverhalten beobachtet worden.

Der Kolbenring hat bevorzugt eine Übergangsschicht, die durch aufgeschmolzene Pulverpartikel (Splats genannt) gebildet ist, die gleichmäßig verteilt sind.

Um eine gleichmäßige Splatstruktur in der Übergangsschicht zu erreichen, werden bevorzugt Pulverwerkstoffe mit einer Partikelgröße von 5 - 70µm verwendet. Pulverwerkstoffe mit einer Partikelgröße von 5 - 70µm werden verwendet, um eine gleichmäßige Splatstruktur von 10 - 150µm in der Übergangsschicht zu erreichen. Die Splatgröße bzw. Splatstruktur bezeichnet dabei einen durchschnittlichen Durchmesser einzelner Splats in der Ebene der, bzw. tangential zu der Lauffläche des Kolbenrings.

Kolbenring nach einem der vorstehenden Ausführungsformen, wobei Pulverwerkstoffe mit einer Partikelgröße von 5 - 70µm verwendet werden um eine gleichmäßige Splatstruktur von 10 - 150µm in der Übergangsschicht (8, 24) zu erreichen.

Die Flächenverteilung der Übergangsschicht an der Oberfläche beträgt etwa 50 - 75% CrCNiC+Mo und 50 % - 25% AlCuFe.

Die Übergangsschicht wird bevorzugt durch Plasmabeschichten gebildet. Die Übergangsschicht wird bevorzugt durch Plasmaspritzen hergestellt.

Die Dicke der Übergangsschicht beträgt bevorzugt zwischen 50 µm und 250µm, besonders bevorzugt zwischen 100- 180 µm.

Die Mikrohärte des verwendeten AlCuFe Materials beträgt bevorzugt zwischen 150 - 300 HV0.05.

Die Mikrohärte von Mo beträgt bevorzugt zwischen 300 - 720 HV0.05.

Die Mikrohärte von CrC-NiCr beträgt bevorzugt zwischen 300-1200 HV0.05.

Zwischen Trägermaterial bzw. Substrat und Verschleißschutzschicht ist bevorzugt eine Haftvermittler- bzw. Haftschicht gebildet.

Der Kolbenring kann mit einem Verfahren hergestellt werden, das die folgenden Schritte umfasst:
(b) Aufbringen einer Verschleißschutzschicht aus Ni, Cr, Mo und/oder Cr3C2auf ein. Trägermaterial;
(c) Aufbringen einer Übergangsschicht auf die Verschleißschutzschicht; und
(d) Aufbringen einer Einlaufschicht aus AlFeCu auf die Übergangsschicht,
wobei das Verfahren bevorzugt vor dem Aufbringen der Verschleißschutzschicht ein
- (a) Aufbringen einer Haftschicht auf das Trägermaterial umfassen kann.

Das Aufbringen der Schichten (b) bis (d) oder (a) bis (d) geschieht bevorzugt durch ein Verfahren, ausgewählt aus Plasmaspritzen, HVOF-Beschichten (Hochgeschwindigkeitsflammspritzen), Lichtbogenspritzen oder einer Kombination der Verfahren.

Zuerst wird bevorzugt eine Haftvermittlerschicht auf das Trägermaterial aufgebracht.

So ist die Übergangsschicht bevorzugt durch einen bestimmten Materialanteil Verschleißschutzschicht und einen bestimmten Materialanteil Einlaufschicht gekennzeichnet.

In den Figuren wird die Erfindung anhand von Darstellungen von Mikroschliffen veranschaulicht.
Fig. 1 zeigt eine auflichtmikroskopische Aufnahme eines erfindungsgemäßen SchichtAufbaus.
Fig. 2A und 2B stellen auflichtmikroskopische Aufnahmen eines erfindungsgemäßen Schichtaufbaus in 100- bzw. 200-facher Vergrößerung dar.
Figur 3 zeigt einen Querschliff eines Schichtaufbaus ohne Übergangsschicht.
Figur 4 zeigt eine Aufsicht auf eine Lauffläche nach einem Abtrag einer Einlaufschicht.
Figur 5 stellt einen Querschliff eines Schichtaufbaus mit Übergangsschicht dar.
Figur 6 zeigt eine Aufsicht auf eine Lauffläche nach einem Einlaufvorgang.

Im Folgenden werden sowohl in der Beschreibung als auch in den Figuren gleiche oder ähnliche Bezugszeichen verwendet um auf gleiche oder ähnliche Elemente und Komponenten Bezug zu nehmen.

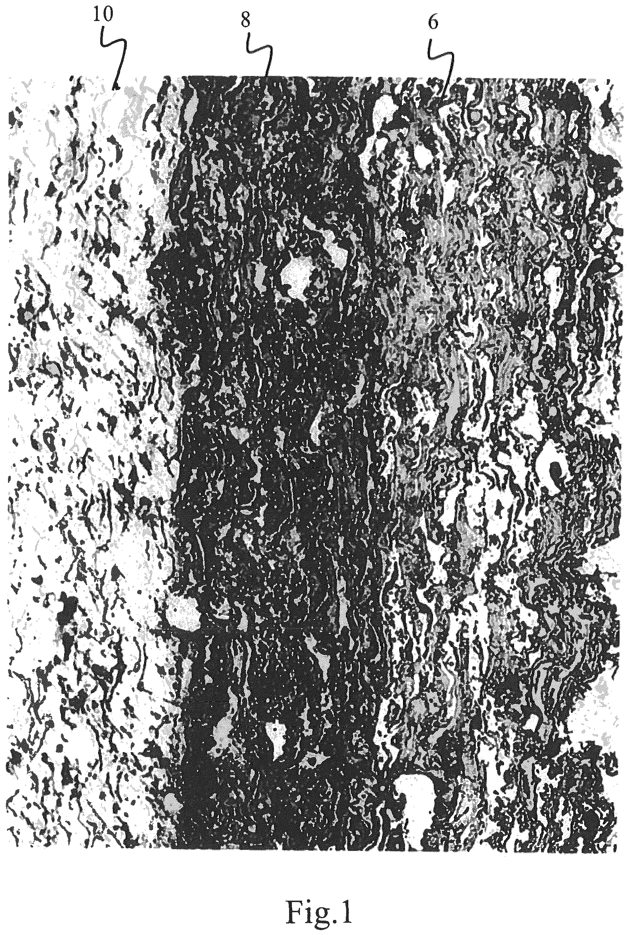

Fig. 1 zeigt eine auflichtmikroskopische Aufnahme eines erfindungsgemäßen Schichtaufbaus. Die unterste Schicht wird dabei von einer Verschleißschutzschicht 6 aus einem Mo Basismaterial gebildet. Auf der Verschleißschutzschicht 6 ist eine Übergangschicht 8 angeordnet, die wiederum von einer Einlaufschicht 10 überdeckt ist.

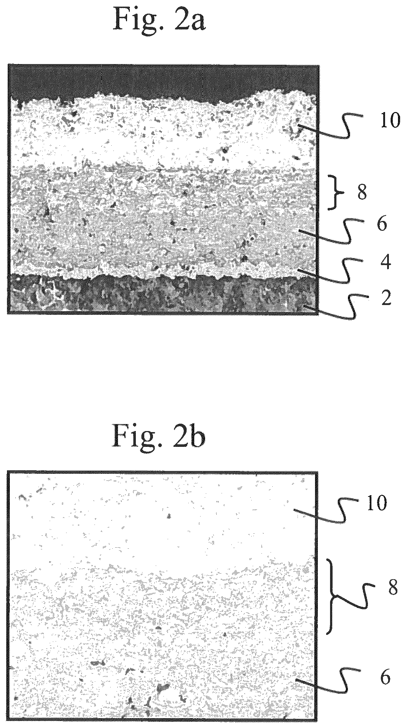

Fig. 2 A und 2B zeigen auflichtmikroskopische Aufnahmen eines erfindungsgemäßen Schichtaufbaus in 100x (Fig. 2a) bzw. 200x (Fig. 2b) Vergrößerung. Auf dem Substratwerkstoff aus Grauguss 2 ist eine Haftschicht 4 aufgebracht, welche eine optimale Adhäsion der Verschleißschutzschicht 6 auf dem Substrat aus Grauguss 2 bewirkt. Auf der Verschleißschutzschicht 6 ist eine Übergangsschicht 8 aufgebracht, und auf der Übergangschicht 8 ist eine Einlaufschicht aus AlCuFe aufgetragen. Die Übergangsschicht 8 befindet sich zwischen der Verschleißschutzschicht aus einem Mo Basismaterial und der Einlaufschicht 10 aus AlCuFe.

Die folgenden Beispiele dienen zur Erläuterung der Erfindung, ohne diese zu begrenzen.

In der vorliegenden Erfindung wird ein Übergang zwischen der Verschleißschutzschicht und der Einlaufschicht mit einer zusätzlichen Übergangsschicht ausgeführt. Diese Übergangsschicht besteht aus einer Materialmischung (Volumenanteil liegt bei etwa 40-60:60-40 V%) aus Einlaufschichtmaterial (AlFeCu) und Verschleißschutzschichtmaterial (Ni, Cr, Mo, Cr3C2).

Die Übergangsschicht wird zwischen dem Aufbringen der Verschleißschutzschicht und dem Aufbringen der Einlaufschicht aufgebracht. Die Dicke der Übergangsschicht beträgt zwischen 50 und 250 µm. Die Übergangsschicht wird durch Plasmabeschichten aufgebracht. Durch gezielte Prozessführung wird die Übergangsschicht so ausgeführt, dass sich eine gleichmäßige lamellare Verteilung der unterschiedlichen Materialkomponenten ergibt, vgl. Figuren 1 und 2. Die aufgeschmolzenen Pulverpartikel sind splatförmig abgeschieden und gleichmäßig verteilt. 90% aller Splats haben einen Durchmesser von 10µm bis 150µm. Die Struktur der Übergangsschicht wird durch eine einheitliche Korngrößenverteilung der beiden Pulvergrößen erzeugt. Um eine gleichmäßige Splatstruktur in der Übergangsschicht zu erreichen, werden Pulverwerkstoffe mit einer Partikelgröße von 5 -70µm verwendet.

Die vorhandene Struktur zeichnet sich durch eine Flächenverteilung an der Oberfläche von 50 - 75% CrCNiC+Mo und 25% - 50% AlCuFe aus, vorzugsweise 50% CrCNiC+Mo zu 50% AlCuFe). Die Flächenverteilung ist dabei an Mikroschliffen parallel oder tangential zur Übergangsschicht auszufuhren. Die Splats bilden dabei flache Flecke oder Klekse, die gegenüber ihrer seitlichen Ausdehnung relativ flach sind. Bei Mikroschnitten ergeben die Splats etwa ein 2-Ton-Tamfleckmuster. Die Flächenverteilung der Splats entspricht dabei im Wesentlichen dem Flächenverhältnis der Materialien der Verschleißschutzschicht CrCNiC+Mo und der Einlaufschicht AlCuFe des Dünnschliffs.

Die makroskopische Schichthärte (HV1) der Übergangsschicht liegt zwischen 200 - 400 HV1. Die Mikrohärte der Schichtkomponenten beträgt:
AlCuFe: 150 - 300 HV0.05;
Mo : 300 - 720 HV0.05 sowie
CrC-NiCr : 300-1200 HV0.05.

Die Übergangsschicht zeichnet sich weiterhin durch eine Laufflächenporosität von 2 - 8% aus. Die gleichmäßige, feinverteilte Struktur der Übergangsschicht bestehend aus weichen (AlCuFe) und harten (Ni, Cr, Mo, Cr3C2) Materialpartikeln verbessert die tribologischen Eigenschaften nach dem Schichtwechsel, d.h. Abtrag der reinen AlCuFe Einlaufschicht. Der Übergang zwischen reiner Einlaufschicht und reiner Verschleißschutzschicht wird durch die Übergangsschicht "sanfter" realisiert. Darüber hinaus wird durch die Schichtdicke von 50µm bis 250µm ein gleichmäßiger Einlauf über den Ringumfang (bei unterschiedlichen Verschleißraten) und über die axialen Ringhöhe erzielt. Damit wird die Beständigkeit bzw. der Widerstand gegen Brandspurbildung und Scuffing deutlich verbessert.

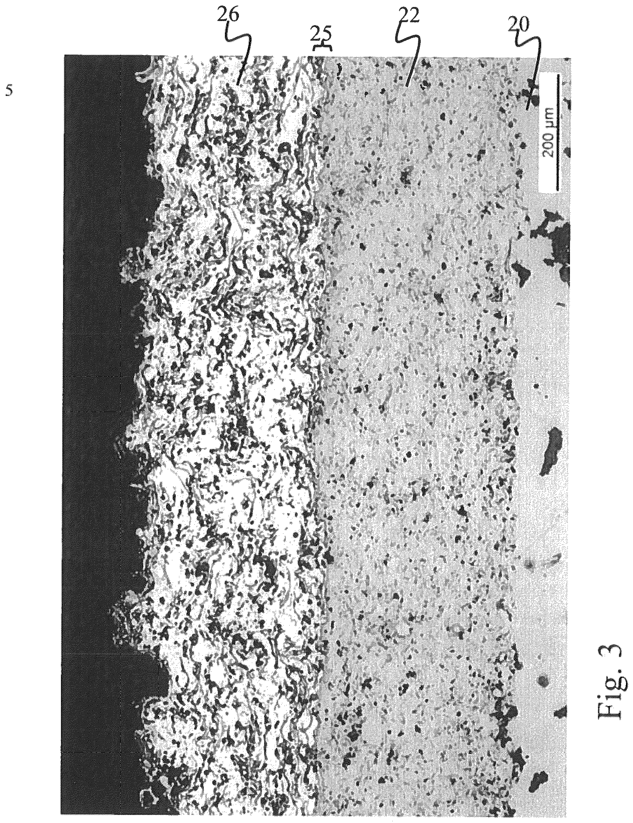

Figur 3 zeigt einen Querschliff eines Schichtaufbaus ohne Übergangsschicht. Der Querschliff zeigt eine Mo/CrC/Ni/Cr Verschleißschutzschicht 22, die auf einem Substrat 20 aufgebracht ist. Auf dieser ist eine AlCuFe Einlaufschicht 26 unter Bildung eines Übergangsbereichs 25 aufgebracht. Der Übergangsbereich 25 wird durch eine Rauheit der Verschleißschutzschicht 22 definiert, wobei in der Figur 3 der Übergangsbereich 25 eine Dicke von 10-40µm aufweist. Der Übergangsbereich 25 wird nicht als eigene Schicht erstellt, sondern entsteht, wenn die Einlaufschicht 26 auf die raue gespritzte Oberfläche der Verschleißschutzschicht 22 aufgespritzt wird. Die Partikel / Splats der Einlaufschicht 26 füllen die Oberflächenunebenheiten der Verschleißschutzschicht auf, was den Übergangsbereich 25 ergibt. In dem Übergangsbereich 25 ergibt sich eine einzelne, nicht glatte aber einfach zusammenhängende Kontaktfläche zwischen der Verschleißschutzschicht 22 und der Einlaufschicht 26.

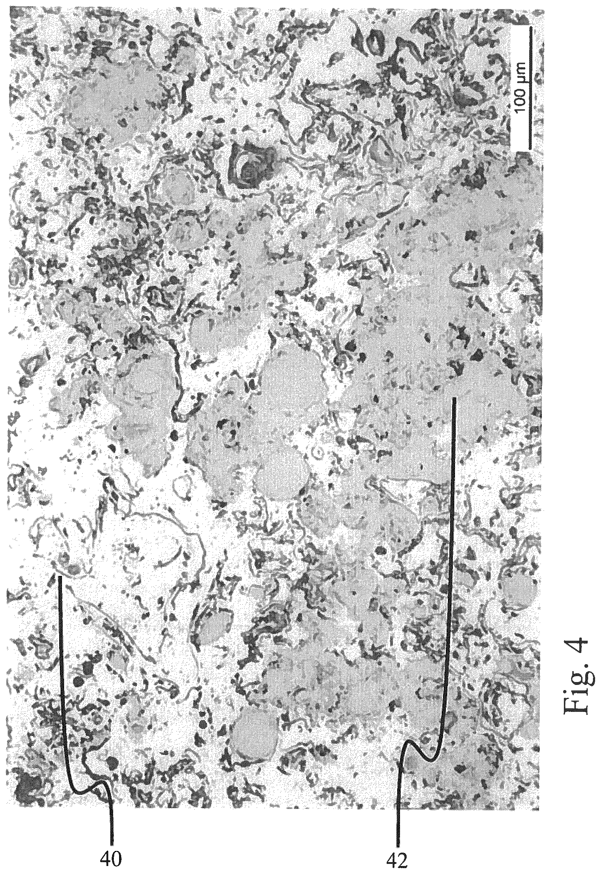

Figur 4 zeigt eine Aufsicht auf eine Lauffläche 40 nach einem Abtrag einer Einlaufschicht 26. Nach einem Abtrag der Einlaufschicht 26 liegen im Übergangsbereich 25 ALCuFe Bereiche der Einlaufschicht 26 und Mo/CrC/Ni/Cr Bereiche der Verschleißschutzschicht 22 nebeneinander vor. Der Übergangsbereich 25 wird in Figur 4 durch die Rauheit der Verschließschutzschicht 22 definiert die hier 10-40µm beträgt. Die unregelmäßige Verteilung der Flächen bzw. Bereiche der Einlaufschicht 26 und der Verschleißschutzschicht 22 sind in der Draufsicht in dem Übergangsbereich 25 gut erkennbar. Die Splats der Verschleißschutzschicht 22 liegen im Übergangsbereich 25 nur auf weiteren Splats der Verschleißschutzschicht 22. Eine erste Schicht Splats des Materials der Einlaufschicht 26 deckt die Verschleißschutzschicht 22 ab, und alle weiteren Splats bilden eine reine und im wesentlichen homogene Einlaufschicht. In dem Übergangsbereich liegt kein Splat der Verschleißschutzschicht 22 über einem Splat des Materials der Einlaufschicht 26. Im Laufe des Abtrags der Einlaufschicht erscheinen im Bereich des Übergangsbereichs 25 größere zusammenhängende Bereiche des Materials der Verschleißschutzschicht 22 neben größeren zusammenhängenden Bereichen des Materials der Einlaufschicht 26.

Je nach Balligkeit des Laufflächenprofils wird die relativ weichere Einlaufschicht 26 unterschiedlich schnell und unterschiedlich stark über der axialen Ringhöhe abgetragen. Ein schlagartiger Anstieg an hartem Verschleißschichtmaterial erhöht die Neigung / Wahrscheinlichkeit einer thermischen Überlastung. Durch eine thermische Überlastung kann es zu einer Rissbildung in der Schicht kommen, was ein Versagen sowie ein Ablösen der Verschleißschutzschicht bewirken kann.

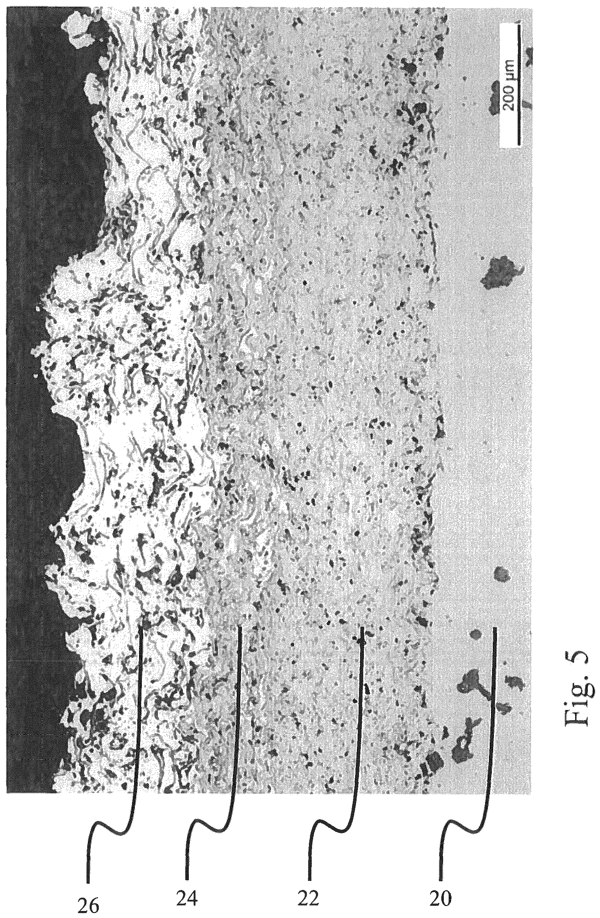

Figur 5 stellt einen Querschliff eines anderen Schichtaufbaus dar. Eine Mo/CrC/Ni/Cr Verschleißschutzschicht 22 ist auf einem Substrat 20 aufgebracht. Auf der Verschleißschutzschicht 22 ist eine Mo/CrC/Ni/Cr + AlFeCu Übergangsschicht 24 in einem Mischungsverhältnis von 50:50 Gew-% aufgebracht die eine Schichtdicke von 140-160µm aufweist. Über der Übergangsschicht 24 ist eine AlFeCu Einlaufschicht 26 angeordnet.

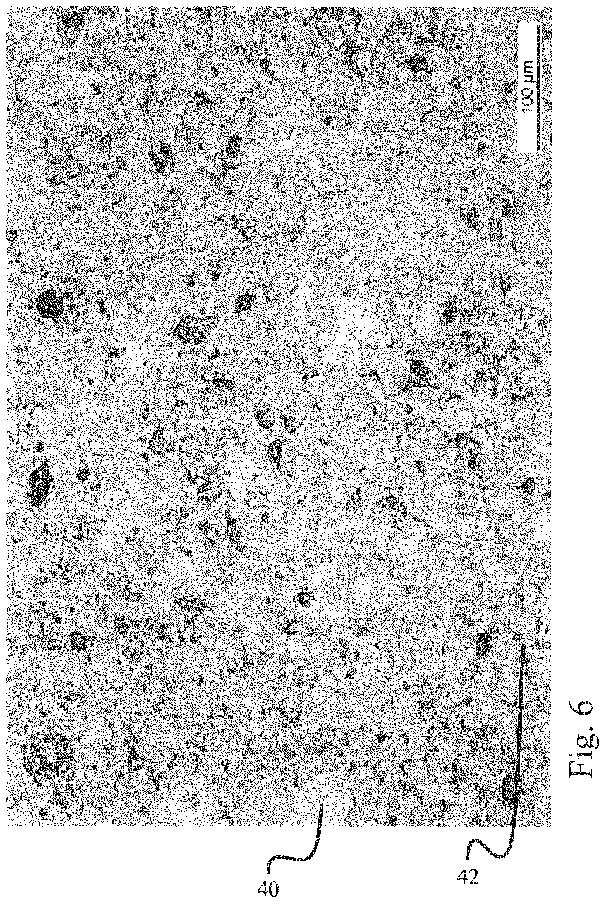

Figur 6 zeigt eine Aufsicht auf eine Lauffläche nach einem Einlaufvorgang, bei dem die Übergangsschicht 24 der Figur 5 freigelegt ist. In der Figur 6 wurde die AlFeCu Einlaufschicht 26 vollständig abgetragen bzw. hat sich durchgelaufen. Die Übergangsschicht 24 liegt über der kompletten axialen Höhe des Kolbenringes vor. Es liegen gleichmäßig verteilt weiche AlFeCu Partikel (40) bzw....Splats" und harte MoCrCNiCr (42) Partikel bzw. ...Splats" vor. Die Splats weisen jeweils eine Größenverteilung im Bereich von 50 bis 100µm auf. Im Vergleich zu der herkömmlichen Kombination einer Einlaufschicht auf einer Verschleißschutzschicht ergibt sich ein besserer, zeitlich längerer (definiert durch die Schichtdicke der Übergangsschicht 24) und gleichmäßigerer Einlaufvorgang und es wird eine Reibungsverbesserung nach dem Durchlaufen der Einlaufschicht erreicht. Im Bereich der Übergangsschicht 24 liegen Splats des Materials der Verschleißschutzschicht 22 neben/unter und über Splats des Materials der Einlaufschicht 26, da diese Übergangsschicht 24 in einem Spitzvorgang gespritzt wird, bei dem beide Materialien verwendet werden. Durch die Übergangsschicht 24 gibt es keine klare Grenzfläche zwischen der Einlaufschicht und der Verschleißschutzschicht 22, und das Schliffbild erscheint kleinfleckig unzusammenhängend.

### Bezugszeichenliste

- 2: Substrat Grauguss
- 4: Haftschicht
- 6: Verschleißschutzschicht aus einem Mo Basismaterial
- 8: Übergangschicht
- 10: Einlaufschicht
- 20: Substrat bzw. Kolbenringmaterial
- 22: Verschleißschutzschicht
- 24: Übergangsschicht
- 25: Übergangsbereich
- 26: Einlaufschicht aus AlFeCu
- 40: AlFeCu- Partikel bzw. Splats
- 42: Mo/CrC/Ni/Cr -Partikel bzw. Splats

## Patentansprüche

1. Kolbenring umfassend:
eine auf einem Substrat vorliegende Verschleißschutzschicht (6, 22) aus Ni, Cr, Mo und/oder Cr₃C₂ ;
eine Einlaufschicht (10, 26) aus AlFeCu;
**dadurch gekennzeichnet, dass**
auf der Verschleißschutzschicht (6, 22), und zwar zwischen Verschleißschutzschicht (6, 22) und Einlaufschicht (10, 26) eine Übergangsschicht (8, 24) vorgesehen ist, worin die Verschleißschutzschicht (6, 22) eine Zusammensetzung von
| | |
|---|---|
| Mo: | 52 - 62 Gew-% |
| Cr: | 12 - 22 Gew-% |
| C: | 0.5 - 2 Gew-% |
| Ni: | 12 - 20 Gew-% |
aufweist, wobei sich die Komponenten Mo, Cr, C und Ni sowie unvermeidbare Verunreinigungen in der Verschleißschutzschicht zu 100 Gew-% addieren, worin die Einlaufschicht eine Zusammensetzung von
| | |
|---|---|
| Al: | 5 - 7 Gew-% |
| Fe: | 1 - 3 Gew-% |
Cu und unvermeidbare Verunreinigungen: Rest zu 100 Gew-% umfasst, und worin die Übergangsschicht (8, 24) 40-60 % AlFeCu und 60-40 % Ni, Cr, Mo und/oder Cr₃C₂ aufweist.

2. Kolbenring nach Anspruch 1, worin die Übergangsschicht durch aufgeschmolzene Pulverpartikel gebildet ist, die splatförmig abgeschieden und gleichmäßig verteilt sind.

3. Kolbenring nach einem der vorstehenden Ansprüche, wobei Pulverwerkstoffe mit einer Partikelgröße von 5 - 70µm verwendet werden, um eine gleichmäßige Struktur aufgeschmolzener Pulverpartikel mit einem durchschnittlichen Durchmesser in der Ebene der, bzw. tangential zu der Lauffläche des Kolbenrings von 10µm - 150µm in der Übergangsschicht (8, 24) zu erreichen.

4. Kolbenring nach einem der vorhergehenden Ansprüche, wobei die Flächenverteilung der Übergangsschicht (8, 24) an der Oberfläche etwa 50 - 75% CrCNiC+Mo und 50 % - 25% AlCuFe beträgt.

5. Kolbenring nach einem der vorstehenden Ansprüche, wobei die Dicke der Übergangsschicht zwischen 50µm und 250µm beträgt.

6. Kolbenring nach Anspruch 5, wobei die Dicke der Übergangsschicht zwischen 100µm und 180 µm beträgt.

7. Kolbenring nach einem der vorstehenden Ansprüche, wobei die Mikrohärte des AlCuFe-Materials zwischen 150 - 300 HV0.05 beträgt.

8. Kolbenring nach einem der vorstehenden Ansprüche, wobei die Mikrohärte des Mo-Materials zwischen 300 - 720 HV0.05 beträgt.

9. Kolbenring nach einem der vorstehenden Ansprüche, wobei die Mikrohärte des CrC-NiCr-Materials zwischen 300-1200 HV0.05 beträgt.

10. Kolbenring nach einem der vorstehenden Ansprüche, wobei zwischen dem Substrat und der Verschleißschutzschicht eine Haftschicht vorliegt.

## Claims

1. A piston ring comprising:
an anti-wear layer (6, 22), which is present on a substrate, made of Ni, Cr, Mo and / or Cr₃C₂;
a running-in layer (10, 26) made of AlFeCu;
**characterized in that**
a transition layer (8, 24) is provided on the anti-wear layer (6, 22), namely between anti-wear layer (6, 22) and running-in layer (10, 26), wherein the anti-wear layer (6, 22) has a composition of
| | |
|---|---|
| Mo: | 52 - 62 % by weight |
| Cr: | 12 - 22 % by weight |
| C: | 0.5 - 2 % by weight |
| Ni: | 12 - 20 % by weight, |
wherein the components Mo, Cr, C, and Ni as well as unavoidable contaminations add up to 100 % by weight in the anti-wear layer, wherein the running-in layer comprises a composition of
| | |
|---|---|
| Al: | 5 - 7 % by weight |
| Fe: | 1 - 3 % by weight |
Cu and unavoidable contaminations: remainder at 100 % by weight, and wherein the transition layer (8, 24) has 40 - 60 % of AlFeCu and 60 - 40 % of Ni, Cr, Mo and / or Cr₃C₂.

2. The piston ring according to claim 1, wherein the transition layer is formed by molten powder particles, which are separated in a splat-shaped manner and are distributed evenly.

3. The piston ring according to one of the preceding claims, wherein powder materials with a particle size of 5 - 70 µm are used to attain an even structure of molten powder particles with an average diameter in the plane of and tangentially to the running surface of the piston ring, respectively, of 10 µm - 150 µm in the transition layer (8, 24).

4. The piston ring according to one of the preceding claims, wherein the surface distribution of the transition layer (8, 24) on the surface is approximately 50 - 75 % of CrCNiC + Mo and 50 % - 25 % of AlCuFe.

5. The piston ring according to one of the preceding claims, wherein the thickness of the transition layer is between 50 µm and 250 µm.

6. The piston ring according to claim 5, wherein the thickness of the transition layer is between 100 µm and 180 µm.

7. The piston ring according to one of the preceding claims, wherein the micro hardness of the AlCuFe material is between 150 - 300 HV0.05.

8. The piston ring according to one of the preceding claims, wherein the micro hardness of the Mo material is between 300 - 720 HV0.05.

9. The piston ring according to one of the preceding claims, wherein the micro hardness of the CrC-NiCr material is between 300-1200 HV0.05.

10. The piston ring according to one of the preceding claims, wherein an adhesive layer is present between the substrate and the anti-wear layer.

## Revendications

1. Segment de piston comprenant :
une couche de protection contre l'usure (6, 22) en Ni, Cr, Mo et/ou Cr₃C₂ se trouvant sur un substrat,
une couche de rodage (10, 26) constituée d'AlFeCu ;
**caractérisé en ce qu'**une couche de transition (8, 24) est prévue sur la couche de protection contre l'usure (6, 22), en particulier entre la couche de protection contre l'usure (6, 22) et la couche de rodage (10, 26), dans lequel la couche de protection contre l'usure (6, 22) présente une composition de
Mo : 52 - 62% en poids
Cr : 12-22% en poids
C : 0,5-2% en poids
Ni : 12-20% en poids
dans lequel les composants Mo, Cr, C et Ni ainsi que des impuretés inévitables dans la couche de protection contre l'usure totalisent 100% en poids, dans lesquels la couche de rodage comprend une composition de
Al : 5-7% en poids
Fe : 1-3% en poids
Cu et impuretés inévitables : le reste comprend 100% en poids, et dans lequel la couche de transition (8, 24) présente 40-60 % d'AlFeCu et 60-40 % de Ni, Cr, Mo et/ou Cr₃C₂.

2. Segment de piston selon la revendication 1, dans lequel la couche de transition est formée de particules de poudre fondue qui sont déposées en forme d'éclaboussures et sont uniformément réparties.

3. Segment de piston selon une des revendications précédentes, dans lequel des matériaux en poudre avec une taille de particules de 5-70µm peuvent être utilisés pour créer une structure uniforme de particules de poudre fondue avec un diamètre moyen dans le plan ou tangentiellement à la surface de roulement du segment de piston de 10µm-150µm dans la couche de transition (8, 24).

4. Segment de piston selon une des revendications précédentes, dans lequel la répartition surfacique de la couche de transition (8, 24) en surface est d'environ 50-75% de CrCNiC+Mo et 50%-25% d'AlCuFe.

5. Segment de piston selon une des revendications précédentes, dans lequel l'épaisseur de la couche de transition est comprise entre 50µm et 250µm.

6. Segment de piston selon la revendication 5, dans lequel l'épaisseur de la couche de transition est comprise entre 100µm et 180µm.

7. Segment de piston selon une des revendications précédentes, dans lequel la microdureté du matériau AlCuFe est comprise entre 150-300 HV0.05.

8. Segment de piston selon une des revendications précédentes, dans lequel la microdureté du matériau Mo est comprise entre 300-720 HV00.05.

9. Segment de piston selon une des revendications précédentes, dans lequel la microdureté du matériau CrCNiCr est comprise entre 300-1200 HV0.05.

10. Segment de piston selon une des revendications précédentes, dans lequel entre le substrat et la couche de protection contre l'usure se trouve une couche adhésive.
